# EUROPEAN PATENT APPLICATION

(11) **EP 1 939 998 A2**
(43) Date of publication of application: **02.07.2008**
(21) Application number: 07150426.0
(22) Date of filing: 27.12.2007
(51) Int. Cl.: H02H 5/04

(54) **Protection apparatus for air circuit breaker**

(30) Priority: 29.12.2006 KR 20060138988
(71) Applicant: LS Industrial Systems Co., Ltd, Seoul 100-801 (KR)
(72) Inventor: Eom, Jae Pil LS Industrial Systems Co., Ltd., Heungdeok-gu Chungcheongbuk-do Cheongju-si (KR)
(74) Representative: Holmberg, Magnus

(57) **Abstract**

A protection apparatus for air circuit breaker for preventing an erroneous operation caused by heat in the course of the air circuit breaker being operated is disclosed, wherein temperatures are detected using the detection signals of temperature sensors attached to various heat generating sources disposed at the air circuit breaker including power lines and contacts, and various constituent elements having a high likelihood of generating an erroneous operation when the temperature is high, and the detected temperatures are compared with prescribed reference temperatures, and as a result of the comparison, if the detected temperatures are higher than the prescribed reference temperatures, the air circuit breaker is determined to have a possibility of generating an erroneous operation, and if air circuit breaker is determined to have a possibility of generating an erroneous operation, the trip coil is driven to trip the air circuit breaker.

## Description

### CROSS-REFERENCE TO RELATED APPLICATION

The present application is based on, and claims priority from, Korean Application Number 10-2006-0138988, filed December 29, 2006, the disclosure of which is incorporated by reference herein in its entirety.

### BACKGROUND

The following description relates generally to a protection apparatus for an air circuit breaker, and more particularly to a protection apparatus for air circuit breaker capable of protecting the air circuit breaker against erroneous operation caused by heat generated in the course of providing an electric power to a load.

A low voltage air circuit breaker is a breaker for extinguishing an arc generated in opening and closing of a contact within the air.

In order for the air circuit breaker to stably supply an electric power to a load, inner constituent elements comprising the air circuit breaker should be prevented from operating erroneously. Furthermore, determination should be made as to whether an accident has occurred by detecting a current supplied to the load via the air circuit breaker, and the supply of power should be instantly interrupted when it is determined that the accident has occurred.

However, the conventional air circuit breaker has a shortcoming in that determination is only made as to whether an accident has occurred to interrupt the supply of power, while the erroneous operation caused by heat generated from the inner constituent elements cannot be prevented.

### SUMMARY

However, the conventional air circuit breaker has a shortcoming in that determination is only made as to whether an accident has occurred to Interrupt the supply of power, while the erroneous operation caused by heat generated from the inner constituent elements cannot be prevented.

The present inventive concept may therefore provide a protection apparatus for an air circuit breaker capable of detecting temperatures of heat generating sources or inner constituent elements disposed therein and tripping the air circuit breaker if the detected temperature is higher than a prescribed reference temperature to thereby prevent an erroneous operation from occurring.

The protection apparatus of the air circuit breaker according to the aforementioned concept may detect temperatures by attaching temperature sensors to various heat generating sources including a power line and contacts and to various constituent elements including a MCU (Micro Controller Unit) that has a possibility of creating an erroneous operation if the temperatures are high,

Furthermore, a comparison is made between the detected temperature and a prescribed reference temperature to determine whether there is any possibility of erroneous operation in the air circuit breaker, and if there is any possibility of the erroneous operation, a warning is generated, or a trip coil is driven to trip the air circuit breaker and to interrupt supply of power to a load.

In one general aspect, a protection apparatus for air circuit breaker comprises: at least one or more temperature detectors for detecting a temperature of the air circuit breaker by way of a temperature sensor; an MCU (Micro Controller Unit) for determining whether there is a possibility of erroneous operation by comparing a temperature detected by the temperature detector with a prescribed reference temperature; and a trip coil for interrupting an electric power to a load as a result of the determination by the MCU.

Implementations of this aspect may include one or more of the following features.

The temperature detector may detect a temperature of the MCU or temperatures of a plurality of heat generating sources disposed inside the air circuit breaker.

The protection apparatus for the air circuit breaker further comprises a warning unit for generating a warning sound in response to the control of the MCU.

The protection apparatus for the air circuit breaker further comprises an ADC (Analogue to Digital Converter) between the temperature detector and the MCU for converting the detected temperature of the temperature detector to a digital signal and inputting the signal to the MCU.

The protection apparatus for air circuit breaker further comprises: a voltage detector for detecting a current supplied to a load through the air circuit breaker and for converting the current to a voltage; and a rectifier for rectifying the detected voltage of the voltage detector and for inputting the voltage to the MCU, wherein the MCU compares the output voltage of the rectifier with a prescribed reference voltage to determine whether there has occurred an accident, and to drive the trip coil if there has occurred an accident.

The protection apparatus for air circuit breaker further comprises an ADC (Analogue to Digital Converter) between the rectifier and the MCU for converting the output voltage from the rectifier to a digital signal and inputting the signal to the MCU.

### BRIEF DESCRIPTION OF THE DRAWINGS

A full understanding of the present concept can be gained in detail from the following description of the exemplary implementations that do not limit the instant inventive concept when read in conjunction with the accompanying drawings.
FIG.1 is a circuit diagram illustrating a configuration of a protection apparatus for air circuit breaker according to prior art.
FIG.2 is a circuit diagram illustrating a configuration of a protection apparatus for air circuit breaker according to the present concept.

### DETAILED DESCRIPTION

The following paragraphs are nothing but exemplars that explain the principles of the novel concept. As will be recognized by those skilled in the art, the innovative concept described in the present application can be modified and varied over a tremendous range of applications, and accordingly the scope of patented subject matter is not limited by any of the specific exemplary teachings given. For the purpose of clarity, technical material that is known in the technical fields related to the invention has not been described in detail so that the concept is not unnecessarily obscured.

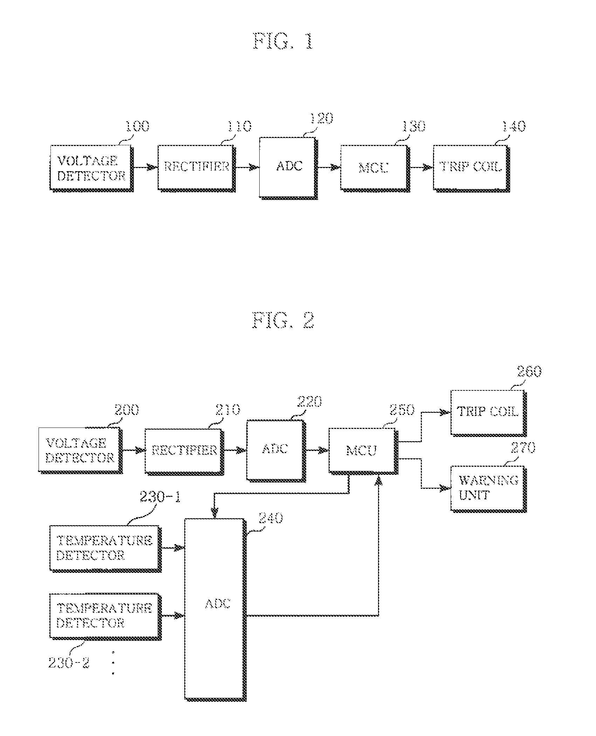

FIG.1 is a circuit diagram illustrating a configuration of a protection apparatus for air circuit breaker according to prior art, where reference numeral 100 is a current detector. The current detector (100) may include, for instance, a current transformer and a Rogowski coil. The current transformer may detect a current supplied to a load by the air circuit breaker, while the current detected by the current transformer is converted to a voltage by the Rogowski coil.

Reference numeral 110 is a rectifier. The rectifier (110) may include a plurality of diodes. The plurality of diodes may rectify the output voltage of the voltage detector (100) to convert the rectified voltage to a ripple voltage.

Reference numeral 120 defines an ADC (Analogue to Digital Converter). The ADC (120) may convert the ripple voltage outputted from the rectifier (110) to a digital signal.

Reference numeral 130 is an MCU (Micro Controller Unit). The MCU (130) may determine whether there has occurred an accident by way of level of ripple voltage outputted by the ADC (120) in a digital signal, and generate a trip signal if it is determined that the accident has occurred.

Reference numeral 140 defines a trip coil which may operate when a trip signal is generated by the MCU (130) to trip the air circuit breaker lest that an electric power should be supplied to a load.

In the protection apparatus thus structured, when the air circuit breaker generates an electric power to a load, the voltage detector (100) may detect a current supplied to the load by the air circuit breaker, convert the detected current to a voltage and output the voltage to the rectifier (110). The detected voltage outputted by the voltage detector (100) which is an alternating voltage may be converted to a ripple voltage by the rectifier (110). The converted ripple voltage may be converted to a digital signal by the ADC (120) and inputted to the MCU (130).

The MCU (130) may determine whether there has occurred an accident by the level of ripple voltage inputted from the ADC (120) in a digital signal. In other words, the MCU (130) may determine whether there has occurred an accident through a mathematical operational process such as RMS (Root Mean Square) operation.

As a result of the determination, if it is determined that there has not occurred an accident, the MCU (130) may not generate a trip signal, whereby the trip coil (140) may not be driven to allow the air circuit breaker to continuously supply the power to the load.

As a result of the determination, if it is determined that there has occurred an accident, the MCU (130) may generate a trip signal. The trip coil may be driven by the generated trip signal to trip the air circuit breaker, whereby the air circuit breaker may interrupt the power that has been supplied to the load, such that the air circuit breaker and the load may not be damaged by the accident current to prevent the accident that has occurred from being propagated.

However, according to the protection apparatus thus described, if an accident has occurred to detect that an accident current is being supplied to a load, the only thing is to interrupt the power supply by tripping the air circuit breaker, and an erroneous operation caused by heat generated by the power supplied to the load from the air circuit breaker cannot be avoided. In other words, as the air circuit breaker supplies the power to the load, heat is generated from heat generating sources such as power lines or contacts, and an inner temperature of the air circuit breaker rises due to the heat thus generated to disable to prevent the erroneous operation of various constituent elements such as MCU disposed at the air circuit breaker.

Therefore, it is essential that the erroneous operation caused by heat generated in the course of the power being supplied to the load from the air circuit breaker be prevented.

FIG.2 is a circuit diagram illustrating a configuration of a protection apparatus for air circuit breaker according to the present concept.

Referring to FIG.2, a protection apparatus for air circuit breaker may include a voltage detector (200), a rectifier (210), an ADC (Analogue to Digital Converter. 220), a plurality of temperature detectors (230-1, 230-2, ...), an ADC (240), an MCU (250), a trip coil (260) and a warning unit (270).

The voltage detector (200) may include, for instance, a current transformer and a Rogowski coil. The current transformer may detect a current supplied to a load by the air circuit breaker, while the current detected by the current transformer is converted to a voltage by the Rogowski coil and outputted.

The rectifier (210) may include a plurality of diodes. The plurality of diodes may rectify the output voltage of the voltage detector (200) to convert the rectified voltage to a ripple voltage. For example, the plurality of diodes may rectify the detection voltage on R, S, T and N phase supplied to the load by the air circuit breaker and convert the rectified voltage to ripple voltage.

The ADC (220) may convert the ripple voltage outputted from the rectifier (210) to a digital signal.

The plurality of temperature detectors (230-1, 230-2, ···) may respectively detect temperatures using the detection signals of temperature sensors (not shown) attached to various heat generating sources including the R, S, T and N phase power lines supplying power to the load and contact, various constituent elements including the MCU (250) having a high likelihood of generating an erroneous operation when the temperature is high, and substrates packaged with elements.

The ADC (240) may convert the temperature detection signals of the plurality of temperature detectors (230-1, 230-2, ···) to a digital signal and output the digitalized signal to the MCU (250).

The MCU (250) may determine whether there has occurred an accident in the power supply of the load by the output signal of the ADC (220). If it is determined that there has occurred an accident, the MCU (250) may operate the trip coil (260) to control the tripping, such that the power supplied to the load by the air circuit breaker can be interrupted. Furthermore, the MCU (250) may determine by the output signal from the ADC (240) whether there has occurred an erroneous operation of the air circuit breaker, and if there is a likelihood of the air circuit breaker being erroneously operated, the trip coil (260) is made to operate to trip the air circuit breaker so that the power supplied to the load can be interrupted, and generation of warning by the warning unit (270) can be controlled.

In the protection apparatus for air circuit breaker thus configured, the current supplied to the load by the air circuit breaker is detected by the voltage detector (100) and is convened to a voltage, the detection voltage is converted to a ripple voltage by the rectifier (110), the converted ripple voltage is converted to a digital signal by the ADC (120) and is inputted to the MCU (130).

The MCU (130) may determine whether there has occurred an accident by the level of ripple voltage inputted from the ADC (120). As a result of the determination, if there is an accident, the MCU (130) may generate a trip signal, and the trip coil (140) may trip the air circuit breaker in response to the trip signal generated to interrupt the power supplied to the load.

Meanwhile, the plurality of temperature detectors (230-1, 230-2, ···) according to the instant inventive concept may respectively detect temperatures using the detection signals of temperature sensors (not shown) attached to various heat generating sources including the R, S, T and N phase power lines and contact, various constituent elements having a high likelihood of generating an erroneous operation when the temperature is high, and substrates packaged with elements, and generate detection signals for input to the ADC (240).

The ADC (240) may select the detection signals outputted by the plurality of temperature detectors (230-1, 230-2, ···) in response to the control of the MCU (250) and convert the signal to digitalized temperature detection signals, where the converted temperature detection signals are inputted to the MCU (250).

Successively, the MCU (250) may compare the plurality of temperature detection signals inputted from the ADC (240) with a plurality of prescribed reference temperature values to determine whether the air circuit breaker has a high likelihood of generating an erroneous operation. In other words, the MCU (250) may determine that the air circuit breaker has a high likelihood of being erroneously operated if the plurality of temperature detection signals inputted from the ADC (240) is higher than the plurality of prescribed reference temperature values.

As a result of the determination, if it is determined that the plurality of temperature detection signals inputted from the ADC (240) is lower than the plurality of prescribed reference temperature values and there is no likelihood of the air circuit breaker being erroneously operated, the MCU (250) may not operate the trip coil (260), whereby the air circuit breaker keeps supplying the power to the load steadily.

As a result of the determination, if it is determined that the plurality of temperature detection signals inputted from the ADC (240) is higher than the plurality of prescribed reference temperature values and there is a high likelihood of the air circuit breaker being erroneously operated, the MCU (250) may drive the trip coil (260) to trip the air circuit breaker, whereby the power is not supplied to the load.

Furthermore, the MCU (250) may control the warning unit (270) to generate a warning sound, repeatedly light on or off a warning lamp, and warn in such a manner that there is a high likelihood of the air circuit breaker of being erroneously operated.

Herein, the exemplary implementation has described an approach where the trip coil (260) is driven to trip the air circuit breaker when the detection temperature is higher than the reference temperature, and a warning is generated. In the implementation of the present concept, the concept may be configured in such a manner that the trip coil (260) is driven to trip the air circuit breaker when the detection temperature is higher than the reference temperature and not to generate a warning, or the air circuit breaker may not be tripped to allow the warning unit (270) to generate a warning.

The above exemplary implementation has described that ADCs (220, 240) are interposed between the rectifier (210) and the MCU (250), and between the plurality of temperature detectors (230-1, 230-2, ···) and the MCU (250) to cause the output voltages of the rectifier (210) and the plurality of temperature detectors (230-1, 230-2, ···) to be converted to digital signals and inputted to the MCU (250), It may be also possible to configure the protection apparatus in such a fashion that the output voltages of the rectifier (210) and the plurality of temperature detectors (230-1, 230-2, ···) are not converted to digital signals and directly inputted to the MCU (250) if the MCU (250) has a built-in function of converting analogue signals to digital signals.

Furthermore, although the above approach has described that the currents and temperatures supplied to the load are all detected to protect the air circuit breaker, many other variations and changes are possible where only the temperatures are detected to protect the air circuit breaker.

As apparent from foregoing, temperature sensors are attached to various heat generating sources disposed in the air circuit breaker and elements having a possibility of creating an erroneous operation when temperatures are high to detect the temperatures, and determination is made by the detected temperatures as to whether the air circuit breaker has a likelihood of generating an erroneous operation. As a result of the determination, if there is a chance of the air circuit breaker generating an erroneous operation, a warning sound is created or the air circuit breaker is tripped.

Furthermore, determination is made by the current supplied to the load of the air circuit breaker as to whether there has occurred an accident, and if it is determined that there has occurred an accident, the air circuit breaker is tripped to interrupt the power supply.

Therefore, the protection apparatus for the air circuit breaker according to the instant inventive concept can protect the air circuit breaker and the load against damage caused by occurrence of accident and temperature rise, and prevent the air circuit breaker from operating in erroneous situation to enable a stable supply of power to the load.

As the present concept, may be embodied in several forms without departing from the spirit or essential characteristics thereof, it should also be understood that the above-described implementations are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A protection apparatus for air circuit breaker comprising: at least one or more temperature detectors for detecting a temperature of the air circuit breaker by way of a temperature sensor; an MCU (Micro Controller Unit) for determining whether there is a possibility of erroneous operation by comparing a temperature detected by the temperature detector with a prescribed reference temperature; and a trip coil for interrupting an electric power to a load as a result of the determination by the MCU.

2. The apparatus as claimed in claim 1, wherein the temperature detector detects temperatures of heat generating sources or MCU disposed in the air circuit breaker.

3. The apparatus as claimed in claim 1, further comprising a warning unit for generating a warning sound under the control of the MCU.

4. The apparatus as claimed in claim 1, further comprising an ADC (Analogue to Digital Converter) between the temperature detector and the MCU for converting the detected temperature of the temperature detector to a digital signal and inputting the signal to the MCU.

5. The apparatus as claimed in claim 1, further comprising: a voltage detector for detecting a current supplied to a load through the air circuit breaker and for converting the current to a voltage; and a rectifier for rectifying the detected voltage of the voltage detector and for inputting the voltage to the MCU, wherein the MCU compares the output voltage of the rectifier with a prescribed reference voltage to determine whether there has occurred an accident, and to drive the trip coil if there has occurred an accident.

6. The apparatus as claimed in claim 5, further comprising an ADC (Analogue to Digital Converter) between the rectifier and the MCU for converting the output voltage from the rectifier to a digital signal and inputting the signal to the MCU.
